# EUROPEAN PATENT APPLICATION

(11) **EP 4 834 084 A1**
(43) Date of publication of application: **04.11.2026**
(21) Application number: 23963119.5
(22) Date of filing: 27.12.2023
(51) Int. Cl.: A01D 34/64, A01B 51/00

(54) **WORK MACHINE**

(71) Applicant: Kubota Corporation, Osaka-shi, Osaka 530-0011 (JP)
(72) Inventor: FUJIWARA Tetsuya, Sakai-shi, Osaka 590-0908 (JP)
(74) Representative: Cabinet Beau de Loménie
(86) International application number: PCT/JP2023/046953
(87) International publication number: WO 2025/141770

(57) **Abstract**

In a work machine that is suspended and held by an unmanned flight vehicle B via suspension tools C and configured to perform predetermined work, there has been a demand for being able to move over long distances efficiently and perform excellent ground work. A work machine configured to be suspended and held by an unmanned flight vehicle B via suspension tools C and perform predetermined work includes: a machine body 10; a plurality of ground wheels 11 supporting the machine body 10 to enable moving and traveling of the machine body 10; and a work device 12 provided at a lower part of the machine body 10 and configured to perform predetermined ground work. The machine body 10 has a plurality of suspension points J to which the suspension tools C are respectively connected, the suspension points J being provided at intervals while surrounding a gravity center position in a plan view.

## Description

### Technical Field

The present invention relates to a work machine that is suspended and held by an unmanned flight vehicle via suspension tools and performs predetermined work.

### Background Art

Conventionally, there are work machines of the above-described type that are suspended and held by an unmanned flight vehicle via two suspension tools (e.g., wires) and are configured to perform predetermined ground work as the flight vehicle moves (see Patent Document 1, for example).

### Prior Art Document

### Patent Document

Patent Document 1: WO 2023-203671A

### Disclosure of the Invention

### Problem to be Solved by the Invention

Such a conventional work machine has an unstable suspended posture, and cannot thus be moved while floating above the ground by a flight vehicle. As a result, when moving by being towed by the flight vehicle, the work machine must always be towed via suspension tools while keeping in contact with the ground and following the ground, which is disadvantageous in terms of taking a long time to cover long distances.

In addition, if the work machine performs ground work while being towed by the flight vehicle, the unmanned vehicle will move ahead of the work machine, and the work machine will follow slightly behind. Then, if the connection point of one suspension tool is located upstream in the moving direction of the flight vehicle and the connection point of the other suspension tool is located downstream in the moving direction, a greater tensile load may be applied to the suspension tool located downstream in the moving direction than the suspension tool located upstream in the moving direction. If the connection point of the suspension tool located downstream in the moving direction is located rearward of the center of gravity of a work device, the work device will be subjected to a tensile force at an off-center position with respect to either the left or right at the rear. As a result, the machine body may drift along a left-right direction and have an unstable posture, so it is difficult for the work machine to move smoothly in the moving direction of the flight vehicle, causing a risk that it cannot properly perform work.

Therefore, in a work machine that is suspended and held by an unmanned flight vehicle via suspension tools and performs predetermined work, there has been a demand for being able to move efficiently over long distances as well as to perform ground work excellently.

### Means for Solving Problem

A feature configuration of a work machine according to the present invention is directed to a work machine configured to be suspended and held by an unmanned flight vehicle via suspension tools and perform predetermined work, including: a machine body; a plurality of ground wheels supporting the machine body to enable moving and traveling of the machine body; and a work device provided at a lower part of the machine body and configured to perform predetermined ground work, the machine body having a plurality of suspension points to which the suspension tools are respectively connected, the suspension points being provided at intervals while surrounding a gravity center position in a plan view.

According to the present invention, when the work machine is to be moved while floating above the ground by the flight vehicle, suspending the work machine using the plurality of suspension tools can result in stable suspension of the work device without any posture disturbance, since the gravity center position is surrounded by the plurality of suspension points.

Furthermore, when performing ground work, even if a greater tensile load is applied to a suspension tool connected at a position more rearward of the gravity center position than a suspension tool connected at a position frontward of the gravity center position, the work machine will be subjected to equal tensile force on both left and right sides since a plurality of suspension points are provided at intervals while surrounding the gravity center position in a plan view. As a result, it is possible to perform excellent ground work while preventing the posture of the machine body from becoming unstable.

The work machine that is suspended and held by an unmanned flight vehicle via suspension tools and configured to perform predetermined work can move efficiently over long distances and perform ground work excellently.

According to the present invention, preferably, the interval between each pair of adjacent suspension points is greater than half of an overall width of the machine body in a direction in which the pair of adjacent suspension points are next to each other.

With this configuration, since the plurality of suspension tools are connected to the machine body at intervals greater than half of the overall width of the machine body, it is possible to further stabilize the posture of the machine body when performing ground work.

According to the present invention, preferably, the plurality of suspension points include a suspension point located on the machine body on a downstream side in a moving direction of the unmanned flight vehicle and a suspension point located on the machine body on an upstream side in the moving direction, and the suspension point on the downstream side in the moving direction receives a suspension load that is greater than half of a total suspension load applied to the machine body.

With this configuration, since the machine body is subjected to a tensile force at a front side position by a suspension tool connected on the downstream side in the moving direction along with the movement of the unmanned flight vehicle, the machine body is towed easily along with the movement of the unmanned flight vehicle. As a result, the posture becomes stable and the ground work can be performed excellently.

According to the present invention, preferably, the work machine is changeable and adjustable with respect to a state of suspension by the suspension tools, and in response to a suspension load applied to a suspension point on a downstream side in a moving direction being less than half of a total suspension load, the state of suspension by the suspension tools is changed and adjusted in such a manner that the suspension load applied to the suspension point on the downstream side in the moving direction is greater than half of the total suspension load.

With this configuration, while the flight vehicle is moving ahead of the work machine, the suspension load applied by the suspension tool located on the downstream side in the moving direction may be reduced depending on the tilt state of the suspension tool. In such a case, by adjusting the state of suspension by the suspension tools, the suspended load applied by the suspension tool on the downstream side in the moving direction is increased to be larger than half of the total suspension load. As a result, the posture becomes stable and the ground work can be performed excellently.

According to the present invention, preferably, the ground wheels are traveling wheels, and the work machine executes the work while moving by being towed by the suspension tools with the traveling wheels being in ground contact.

With this configuration, since, while the work machine is moved by being towed by suspension tools, the traveling wheels are in ground contact, the work device can move smoothly with the action of the traveling wheels, and can perform the work effortlessly and smoothly.

According to the present invention, preferably, the work device is a mowing device configured to perform mowing work while moving along a ground surface.

With this configuration, it is possible to perform excellent mowing work as the unmanned vehicle moves.

### Brief Description of the Drawings

FIG. 1 is a front view of a work system.
FIG. 2 is a plan view of the work system.
FIG. 3 is a plan view of a mower.
FIG. 4 is a front view of the mower.
FIG. 5 is a plan view of a protective member.
FIG. 6 is a side view of the protective member.
FIG. 7 is a plan view of a rotational action region of a working propeller.
FIG. 8 is a side view of the rotational action region of the working propeller.
FIG. 9 is a control block diagram.
FIG. 10 is a front view of the mower in a mowing work mode.
FIG. 11 is a front view of the mower in a mowing work mode according to another embodiment.
FIG. 12 is a side view of the mower in a mowing work mode according to yet another embodiment.
FIG. 13 is a side view of the mower in a mowing work mode according to yet another embodiment.

### Best Mode for Carrying out the Invention

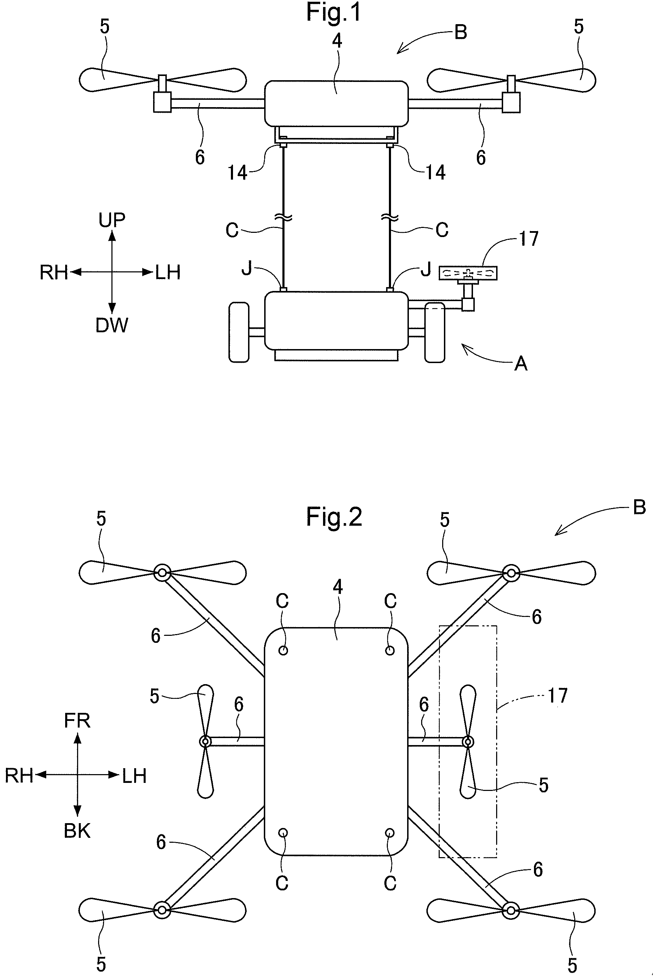

Hereinafter, an embodiment for implementing the present invention will be described with reference to the drawings. In the following description, unless otherwise noted, the direction of an arrow FR shown in FIG. 2 is "forward", the direction of an arrow BK is "rearward", the direction of an arrow LH shown in FIGS. 1 and 2 is "leftward", and the direction of an arrow RH is "rightward". The direction of an arrow UP shown in FIG. 1 is "upward" and the direction of an arrow DW is "downward".

FIGS. 1 and 2 show a work system in which a mower, serving as a work machine, is suspended and held by an unmanned flight vehicle via suspension tools. The work system includes a flight vehicle B, which is an unmanned flight vehicle called a drone, and a mower A suspended and held by the flight vehicle B via a plurality of suspension tools C. The flight vehicle B is configured to fly alone. The flight vehicle B includes a body section 4, a plurality of flying propellers 5 serving as flying rotary wings, and a plurality of arm sections 6.

Note that the numbers of flying propellers 5 and arm sections 6 are not limited, but in the present embodiment, six flying propellers 5 and six arm sections 6 are provided. The six arm sections 6 extend from the body section 4 to the front left, front right, rear left, rear right, right side, and left side, respectively.

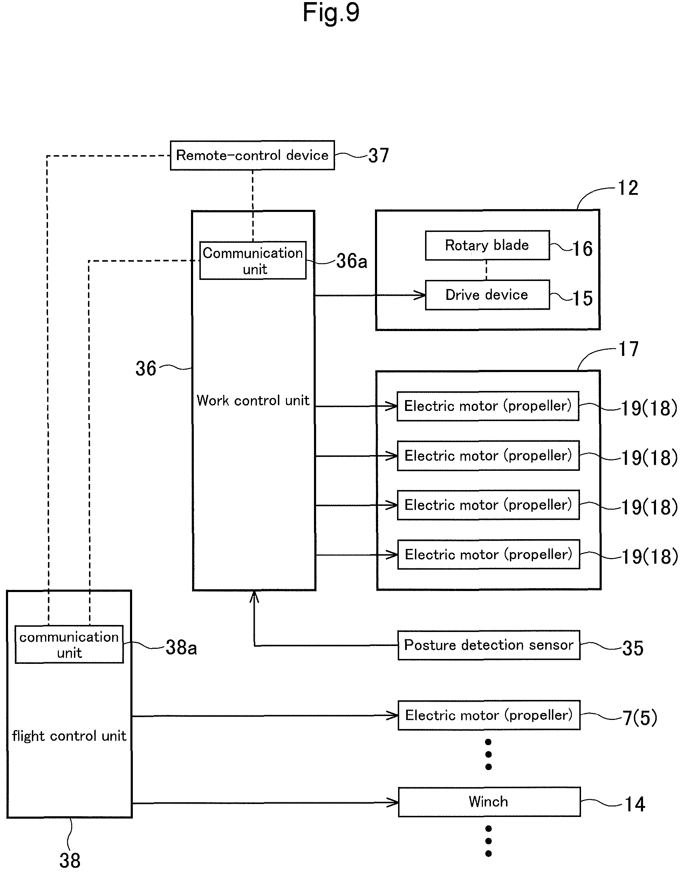

Each of the flying propellers 5 is driven by the drive force of an electric motor 7 (see FIG. 9). The flight vehicle B can fly by driving the flying propellers 5. In other words, the flying propellers 5 are driven to rotate, thereby causing air to flow downward to generate upward thrust. By driving each of the flying propellers 5, the flight vehicle B can move in any direction, namely, an up-down direction, a front-rear direction, and a left-right direction, while floating in the air. The flight vehicle B can stop while flying by driving each of the flying propellers 5.

### [Overall Configuration of Mower]

The mower A includes a machine body 10, a plurality of ground wheels 11 supporting the machine body 10 to enable moving and traveling of the machine body 10, and a mowing device 12 provided at a lower part of the machine body 10 and serving as a work device for performing mowing work as predetermined ground work. The ground wheels 11 are provided on both the left and right sides of a front part of the machine body 10 and on both the left and right sides of a rear part of the machine body 10. The four ground wheels 11 are supported so as to be rotatable about lateral axes extending along the left-right direction.

The mower A according to the present embodiment is provided with a total of four ground wheels 11 on both the left and right sides of the front part of the machine body 10 and on both the left and right sides of the rear part of the machine body 10. The mower A can be towed by the flight vehicle B, which moves while flying, via four suspension tools C, and can move while following the flight vehicle B. The ground wheels 11 rotate freely while being in contact with and following the ground by being towed, and supports the machine body 10. The suspension tools C are wires. The suspension tools C are not limited to wires, but may be ropes, chains, or the like.

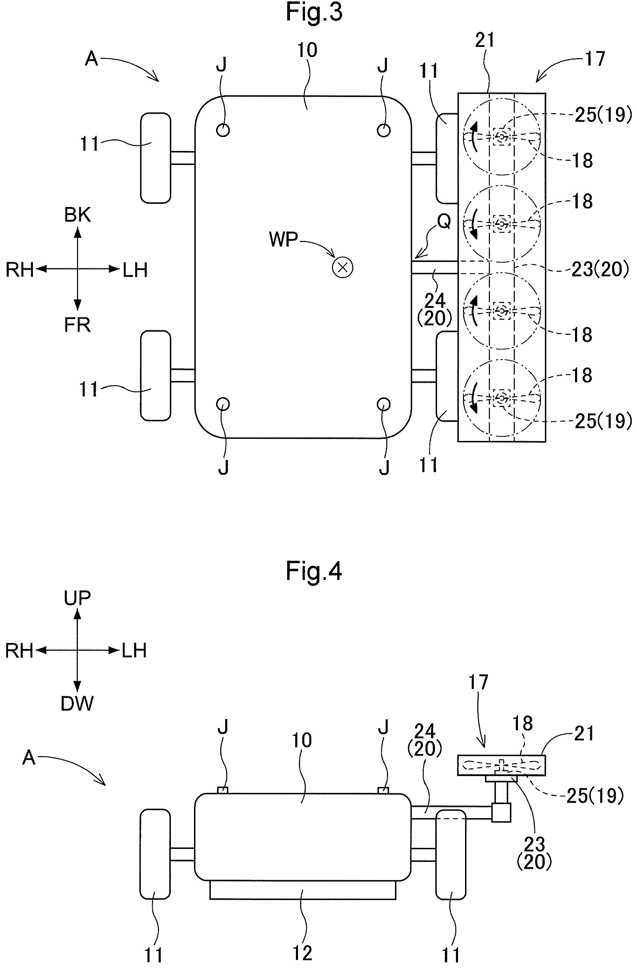

The machine body 10 has a plurality of (four) suspension points J to each of which a suspension tool C is connected, the suspension points J being provided at intervals while surrounding a gravity center position WP in a plan view. As shown in FIG. 3, four suspension points J are provided for the gravity center position WP of the entire mover A while surrounding the gravity center position WP in a plan view, and spaced at intervals in the front-rear direction and the left-right direction of the machine body 10. One end of a suspension tool C is connected to each suspension point J. The other end of the suspension tool C is connected to the body section 4 of the flight vehicle B.

The state of suspension by the suspension tools C can be changed and adjusted. In other words, a winch 14 is provided at the end of each suspension tool C on the flight vehicle B side to allow the suspension tool C to be wound in and wound out. By operating the winch 14 to adjust the wound-out amount of the suspension tool C, it is possible to change the relative position between the connection point on the body section 4 of the flight vehicle B and the connection point (suspension point J) on the mower A that are connected to each other via the suspension tool C.

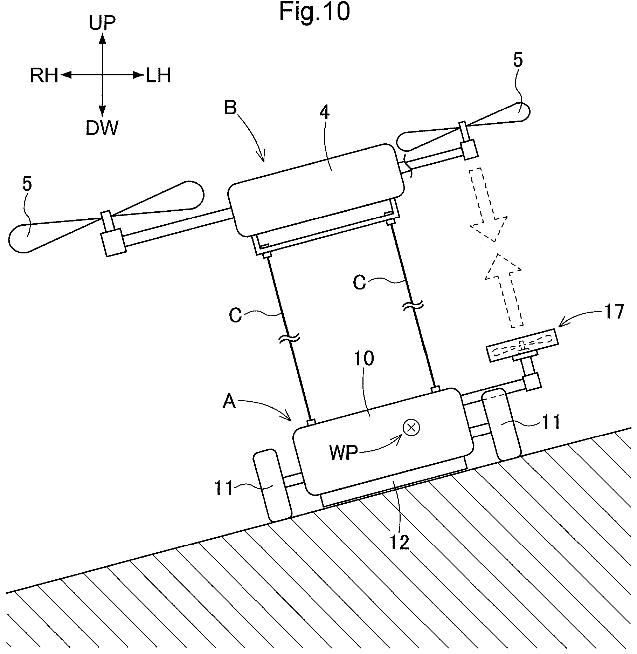

For example, by operating the winches 14 for the two suspension tools C on one side in the left-right direction in the winding up direction, the lengths of the wound-out suspension tools C are reduced compared to those of the two suspension tools C on the other side in the left-right direction. With this, it is possible to achieve a posture of the mower A in which the portion on the one side in the left-right direction is raised above the portion on the other side. This posture can cause the mower A in a sloped work site to move forward in a direction orthogonal to the slope direction by being towed by the flight vehicle B (see FIG. 10).

As shown in FIG. 3, the intervals between the suspension points J are greater than half of the overall width of the machine body 10 in the direction in which these suspension points J are next to each other. For example, the interval between the suspension points J for the two suspension tools C on the front side is greater than half of the overall width of the machine body 10 in the left-right direction, and the interval between the suspension points J for the two suspension tools C on the rear side is greater than half of the overall width of the machine body 10 in the left-right direction. Furthermore, the interval between the suspension points J for the two suspension tools C on the right side is greater than half of the overall width of the machine body 10 in the front-rear direction, and the interval between the suspension points J for the two suspension tools C on the left side is greater than half of the overall width of the machine body 10 in the front-rear direction.

The plurality of suspension points J are located on the mower A on the downstream side in the moving direction of the flight vehicle B and the upstream side in the moving direction of the flight vehicle B, and the mower A is towed in a state where a suspension load applied to the suspension points J on the downstream side in the moving direction is greater than half of the total suspension load applied to the mower A. If a suspension load applied to the suspension points J on the downstream side in the moving direction is less than half of the total suspension load, the state of suspension by the suspension tools C is changed and adjusted so that the suspension load applied to the suspension points J on the downstream side in the moving direction is greater than half of the total suspension load.

The state where suspension load applied to the suspension points J on the downstream side in the moving direction is less than half of the total suspension load refers to the state where the suspension load exerted by the two suspension tools C located on the downstream side in the moving direction is smaller than the suspension load exerted by the two suspension tools C located on the upstream side in the moving direction. So, for example, the lengths of the two suspension tools C located on the downstream side in the moving direction are reduced, or the lengths of the two suspension tools C located on the downstream side in the moving direction are increased. The winches 14 can be operated to enable the state of suspension by the suspension tools C to be changed and adjusted so that the aforementioned suspension load is greater than half of the total suspension load.

The flight vehicle B can hold the entire mower A in a state where it is floating above the ground. When the mowing destination is far away, the flight vehicle B can fly and move while suspending and holding the entire mower A so that it is floating above the ground. This allows for efficient work.

The mowing device 12 includes a drive device 15 for mowing and a rotary blade 16 that is driven and rotated by the drive device 15 (see FIG. 9). Using motive power of the drive device 15, the rotary blade 16 can rotate at high speed to perform mowing work. The drive device 15 may be an engine or an electric motor. Each of the ground wheels 11 is supported on a spindle so as to be freely rotatable, and in cases of performing mowing work, the ground wheels 11 support the machine body 10 by contacting and following the ground while rotating freely.

### [Thrust Generator]

The mower A includes a thrust generator 17 that generates thrust so that its portion located on the upper side of a slope is pushed downward in response to the machine body 10 being tilted. The thrust generator 17 is provided on a lateral part of the machine body 10. The mower A is often used to perform work for mowing weeds growing on the slope ground. During the work on the slope ground, as shown in FIG. 10, the machine body 10 is moved in a direction orthogonal to the slope direction and mowing work is performed.

Depending on the condition of a work site, the slope angle of the slope surface may be large and the tilt angle of the machine body 10 in the left-right direction may become large. If the tilt angle of the machine body 10 in the left-right direction becomes larger and the machine body 10 is further tilted more than its maximum tilt angle, the upper side (mountain side) of the machine body 10 in the slope direction will be raised, causing a risk that the mowing device 12 floats above the ground. Therefore, in the mower A according to the present embodiment, the thrust generator 17 is provided in a lateral part of the machine body 10 on the side corresponding to the upper side (mountain side) in the slope direction, out of the left and right sides of the machine body 10.

The thrust generator 17 includes a plurality of working propellers 18 serving as working rotary wings, a plurality of electric motors 19 that drive and rotate the respective working propellers 18, a support frame 20 that supports the plurality of electric motors 19, and a protective member 21 that covers the periphery of the plurality of working propellers 18.

The working propellers 18 are driven and rotated by the electric motors 19 to allow the gas (air) to flow upward to generate thrust. The plurality of working propellers 18 are provided side by side along the front-rear direction of the machine body. An even number of (specifically, four) working propellers 18 are provided, and adjacent working propellers 18 are driven so as to rotate in different directions.

The working propellers 18 generate an upward air flow, which generates downward thrust so that the entire device is pushed downward. As a result, the thrust generator 17 can generate thrust so that its portion located on the upper side of a slope is pushed downward when the machine body 10 is tilted.

The support frame 20 includes a frame body section 23 that extends along the front-rear direction of the machine body and supports the four electric motors 19, and a connection arm 24 that extends from the central part of the frame body section 23 in the front-rear direction of the machine body 10 toward the machine body 10 and is connected to the machine body 10.

The thrust generator 17 is provided with vane support sections 25 that support the working propellers 18 so that they can rotate. The vane support sections 25 are provided below the working propellers 18 while being attached to the frame body section 23 of the support frame 20. The electric motors 19 are supported in one piece with the vane support sections 25. Therefore, four electric motors 19 are supported by the frame body section 23.

A thrust acting point Q at which the thrust generator 17 applies thrust to the machine body 10 is set among the even number of working propellers 18. The position at which the thrust generator 17 applies thrust to the machine body 10 is a connection point between the support frame 20 and the machine body 10. As shown in FIG. 3, the connection arm 24 of the support frame 20 is provided at the midpoint of four working propellers 18 lined up along the front-rear direction of the machine body 10, that is, between the second working propeller 18 and the third working propeller 18 from the front. Therefore, the position of the connection arm 24 is set between the even number of (four) working propellers 18. The even number is not limited to four, and may be changed to two, six, eight, or the like.

The thrust acting point Q is set at a position close to the gravity center position WP of the machine body 10. As shown in FIG. 3, in the mower A according to the present embodiment, the gravity center position WP of the machine body 10 is located at an intermediate position in the front-rear direction and is offset toward the thrust generator 17. As a result of the thrust generator 17 being provided, the gravity center position WP is offset toward one lateral side from the central position in the left-right direction. The connection arm 24 is connected to the machine body 10 at a position close to the gravity center position WP. Therefore, the thrust acting point Q is set at a position close to the gravity center position WP of the machine body 10.

The thrust generator 17 is located at a position higher than the gravity center position WP when the machine body 10 is tilted to the maximum tilt angle, and generates thrust so that its portion located on the upper side of the slope is pushed downward.

When the machine body 10 moves on the slope ground, if the machine body 10 is tilted significantly and the gravity center position WP exceeds the limit, there is a risk that the machine body 10 will fall downward of the slope. Therefore, as shown in FIG. 10, the thrust generator 17 is arranged so as to be located at a position higher than the gravity center position WP in a state where the machine body 10 is tilted to the maximum tilt angle that is close to a slope angle at which there is a risk of falling.

If the machine body 10 is tilted, a portion of the machine body 10 on the upper side of the slope may float due to the tilt posture. However, the thrust generator 17 generates thrust so that the portion of the machine body 10 on the upper side of the slope is pushed downward from the position higher than the gravity center position WP, thereby preventing the portion of the machine body 10 on the upper side of the slope from floating and causing the machine body 10 to be pushed downward. As a result, it is possible to efficiently perform mowing work while preventing the mowing device 12 from floating above the ground.

### [Protective Member]

The protective member 21 is described below.

The protective member 21 includes a plurality of crosspiece members 26, and a plurality of ventilation sections 27 are formed between the crosspiece members 26 to allow the flow of air generated by the working propellers 18. In an upper part 21A of the protective member 21, the area occupied by the plurality of crosspiece members 26 relative to the total area of rotational action regions Y of the working propellers 18 when viewed in an air flowing direction is between 1 and 2 percent, and more preferably 1.4 percent or less.

The number of crosspiece members in a lower part provided below the working propellers 18 is less than that in the upper part 21A located above the working propellers 18. According to the present embodiment, no crosspiece member is provided in the lower part provided below the working propellers 18, and the underside of the working propellers 18 is open. Instead of the configuration where the underside of the working propellers 18 is open, a smaller number of crosspiece members may be provided in the lower part provided below the working propellers 18 that in the upper part 21A located above the working propellers 18.

A lateral part 21B of the protective member 21 that is located on the outer side in a radial direction of the working propellers 18 includes ventilation sections 28 that prevent the rotating working propellers 18 at the working propellers 18 from passing therethrough.

The following describes a specific configuration of the protective member 21.

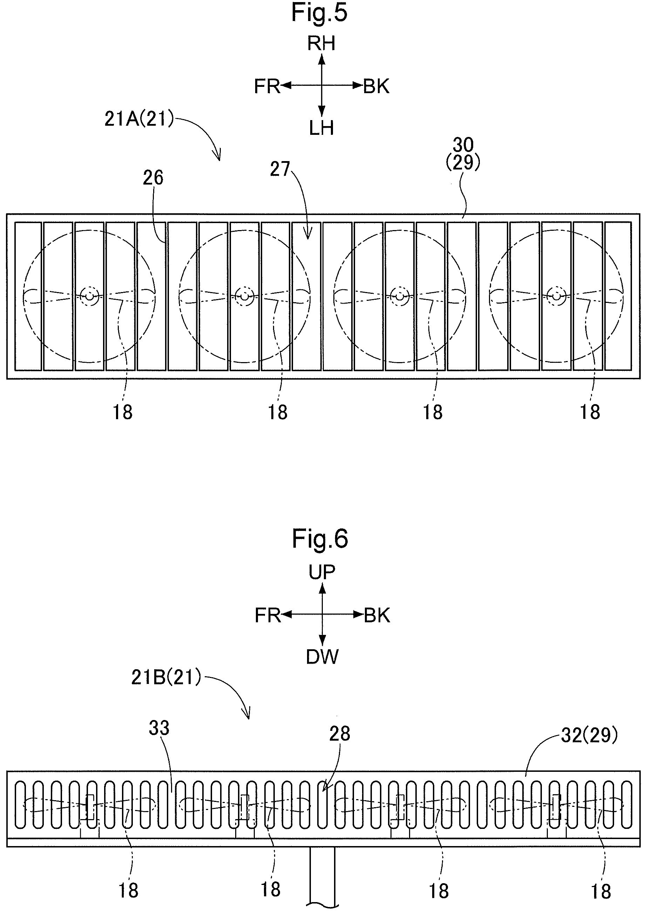

As shown in FIGS. 5 and 6, the protective member 21 includes a frame body 29 that is formed in one piece to enclose the surrounding area. The protective member 21 includes the upper part 21A formed in a rectangular shape in a plan view so as to cover all the four working propellers 18 from above, and four lateral parts 21B covering the outer peripheries of all the four working propellers 18.

As shown in FIG. 5, the upper part 21A of the protective member 21 includes an upper frame section 30 that constitutes part of the frame body 29 and has a rectangular shape that is continuous along the outer peripheries, and a plurality of upper crosspiece members 31 that connect the left and right portions of the upper frame section 30. The plurality of upper crosspiece members 31 are arranged at predetermined intervals along the front-rear direction of the machine body 10. The predetermined intervals are considered safe enough to prevent accidental insertion of a human hand. The ventilation sections 27 for allowing air flow are formed by the spaces between the upper crosspiece members 31.

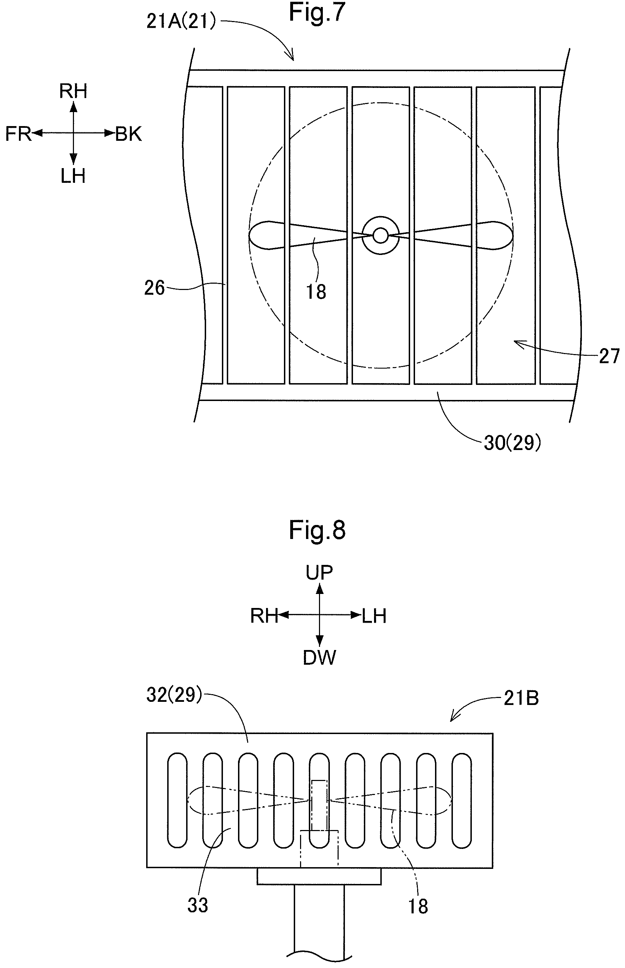

As shown in FIG. 8, the number and width of the upper crosspiece members 31 are set in such a manner that the area occupied by the plurality of upper crosspiece members 31 relative to the total area of the rotational action regions Y (circular region) of the working propellers 18 (blade assembly) in an up-down direction view, which represents the air flowing direction, is 1.4 percent. Note that the aforementioned occupied area is not limited to 1.4 percent, but is sufficient if it is within a range of 1 to 2 percent.

As shown in FIGS. 6 and 7, the lateral part 21B of the protective member 21 forms part of the frame body 29 and includes a side frame section 32 in a rectangular shape in a horizontal direction view, and a plurality of lateral crosspiece members 33 that connect the upper and lower portions of the side frame section 32.

The plurality of lateral crosspiece members 33 are arranged at predetermined intervals along the front-rear direction of the machine body. Ventilation sections 28 are formed by spaces between the lateral crosspiece members 33. The predetermined intervals are intervals that are narrower than the distance between the upper crosspiece members 31, preventing the working propellers 18 from passing therethrough. It allows air to be drawn in through the ventilation sections 28 as the working propellers 18 rotate, and even if the working propeller 18 breaks, it is possible to prevent fragments from flying outward.

### [Thrust Generation State]

As shown in FIG. 2, the working propellers 18 are located within a thrust generation region of the flying propellers 5. Specifically, the working propellers 18 are located within the thrust generation region of the flying propellers 5 located on the side on which the thrust generator 17 is provided, among the plurality of flying propellers 5.

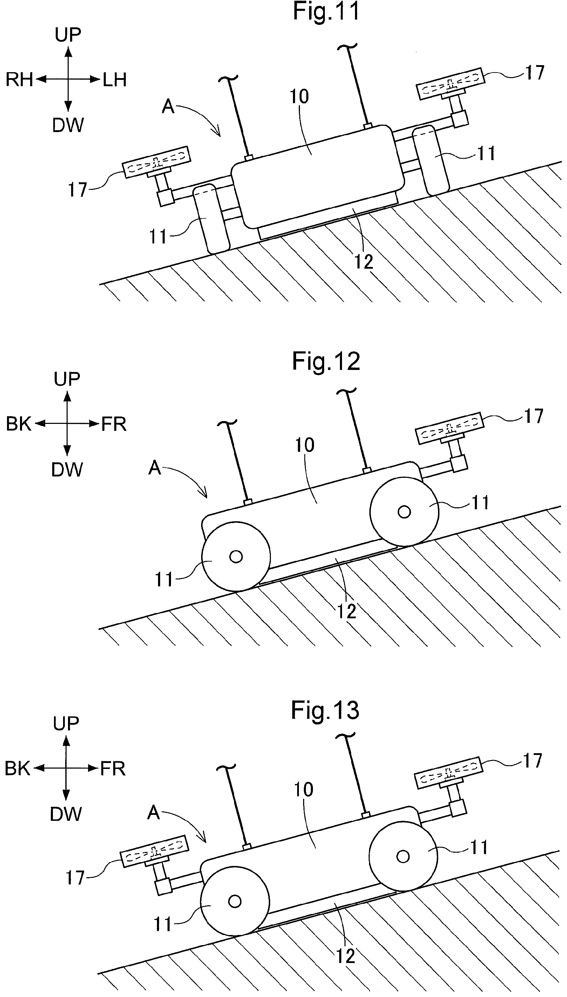

As shown in FIG. 11, the air flowing direction of the working propellers 18 and the air flowing direction of the flying propellers 5 are both the up-down direction, and they are in the same or substantially the same direction. The flight vehicle B flies in such a manner that the thrust generation region of the flying propellers 5 overlaps the thrust generation region of the working propellers 18 along the air flowing direction. In other words, the flying status of the flight vehicle B is set in such a manner that the flight vehicle B flies with the mower A located directly below and flies along the front-rear direction of the machine body of the mower.

In this configuration, the working propellers 18 generate an upward flow of air, thus opposing the downward flow of air caused by the flying propellers 5. As a result, it is possible to assist the upward thrust of the flight vehicle B generated by the flying propellers 5, thereby improving the efficiency of thrust of the flight vehicle B. Furthermore, the flying propellers 5 can assist the downward thrust generated by the working propellers 18, thereby improving the efficiency of thrust of the thrust generator 17.

If the thrust generation region of the flying propeller 5 overlaps the thrust generation region of the working propellers 18 along the air flowing direction, the thrust generation may be reduced in either the flying propellers 5 or the working propellers 18, or both. This can reduce the amount of required power and fuel, saving energy.

### [Control Structure]

The mower A includes a posture detection sensor 35 serving as a posture detection means for detecting a posture change state of the machine body 10, and a work control unit 36 serving as a control unit for controlling the operations of the drive device 15 and the thrust generator 17. Based on the detection result of the posture detection sensor 35, the work control unit 36 controls the operations of the working propellers 18 of the thrust generator 17 to allow air to flow upward in response to the machine body 10 being tilted. Specifically, the work control unit 36 controls the operation of the electric motors 19 that drive the working propellers 18. As a result, the portion of the machine body 10 on the upper side of the slope is pushed downward.

As shown in FIG. 9, the work control unit 36 can transmit information through wireless communication to and from a remote-control device 37, which is operated by the operator via a communication unit 36a. The operator operates the remote-control device 37 to give instructions regarding work content. The work control unit 36 controls the operations of the components in accordance with the instructions. Furthermore, the work control unit 36 can transmit information through wireless communication to and from a flight control unit 38 of the flight vehicle B. The flight control unit 38 can transmit information through wireless communication to and from the remote-control device 37 via the communication unit 38a. The flight control unit 38 controls the operations of the plurality of electric motors 19 for driving the propellers and the winches 14 in accordance with the instructions from the remote-control device 37 and the work control unit 36.

In a case of performing mowing work using the mower A while flying the flight vehicle B, the operator operates the remote-control device 37 to instruct the flight vehicle B to fly and move toward a mowing work site while towing the mower A using the suspension tools C. If the mowing work site is far away, the flight vehicle B moves while the mower A floating above the ground. At this time, if the length of any of the suspension tools C is not appropriate and is loose, the winch 14 is operated to adjust the state of suspension of the suspension tool C so that the length is appropriate, by giving instructions from the remote-control device 37.

In a case of performing mowing work, the mowing device 12 is switched to the work mode in response to instructions from the remote-control device 37, the ground wheels 11 are brought into contact with the ground, and the mower A is towed by the flight of the flight vehicle B via the suspension tools C. At this time, the mower A is towed so as to move along the front-rear direction of the machine body. The operator may also manually control the mower A to perform mowing work while moving, or may also set automated control in such a manner that the mower A performs mowing work along a preset path.

If automated control is set in such a manner that the mower A performs mowing work along a set path, the flight vehicle B may include a satellite positioning device capable of measuring its current position, and the flight control unit 38 may be configured to perform control in such a manner that the flight vehicle B automatically fly along the preset path. The satellite positioning device has a known configuration, and receives GNSS (Global Navigation Satellite System) signals from satellites, generates positioning data indicating the position of the flight vehicle B based on the received signals, and transmits the generated positioning data to the control unit of the flight vehicle B. GNSS may be GPS, QZSS, Galileo, GLONASS, BeiDou, or the like.

If the mower A is to perform work for mowing weeds growing on a slope ground, the mowing work is performed by towing the mower A in such a manner that the machine body 10 moves in a direction orthogonal to the slope direction, as shown in FIG. 10.

The operator visually observes the state of suspension by the four suspension tools C, and if a suspension load applied to the suspension points J on the downstream side in the moving direction is less than half of the total suspension load, the operator changes and adjusts the state of suspension by the suspension tools C so that the aforementioned suspension load is greater than half of the total suspension load.

In other words, if the two suspension tools C on the downstream side in the moving direction are longer than the two suspension tools C on the upstream side in the moving direction and are loose, the suspension loads applied to the suspension points J on the downstream side in the moving direction are reduced. Therefore, the lengths of the two suspension tools C on the downstream side in the moving direction are reduced or the lengths of the two suspension tools C on the downstream side in the moving direction are increased. The winches 14 are operated to change and adjust the state of suspension by the suspension tools C so that the corresponding suspension loads are greater than half of the total suspension load.

Instead of changing and adjusting the state of suspension by human judgment by the operator, a configuration is also possible in which, for example, a load detector (not shown) that detects the towing load associated with the plurality of suspension tools C is provided, and the flight control unit 38 automatically changes and adjusts the state of suspension by the suspension tools C based on the information detected by the load detector.

Upon detecting, during the working on the slope ground, that the tilt angle of the machine body 10 in the left-right direction is a preset tilt angle or greater based on the detection result of the posture detection sensor 35, the work control unit 36 activates the thrust generator 17. As a result, thrust is generated in such a manner that the portion of the machine body 10 on the upper side of the slope is pushed downward, thus preventing the portion on the upper side of the slope from being raised upward due to the tilt of the machine body 10 so that the mowing device 12 floats from the ground surface, and avoiding the mower A from falling and other disadvantageous situations.

### [Other Embodiments]

(1) A configuration is also possible where the intervals between the suspension points J for the plurality of suspension tools C are the same as or smaller than half of the overall width of the machine body 10 in the direction in which the suspension points J are next to each other.
(2) A configuration is also possible where the suspension loads applied to the suspension points J on the downstream side in the moving direction, for the plurality of suspension tools C, are the same as or smaller than half of the overall load on the machine body 10.
(3) A configuration is also possible where the ground wheels 11 are traveling wheels, and the work is executed while the mower is towed via the suspension tools C with the traveling wheels being in ground contact. In this embodiment, the traveling wheels are driven to rotate using the power of the drive device 15 mounted on the machine body 10. The traveling wheels are driven and rotated to move along the towing direction by the flight vehicle B. This configuration enables smooth movement on the ground with the travel driving force of the traveling wheels and facilitates efficient mowing.
(4) As shown in FIG. 11, a configuration is also possible where thrust generators 17 are provided on both left and right sides of the machine body 10. In this configuration, while the mower A (work machine) is moving on the slope ground in a direction orthogonal to the slope direction, even if the moving direction of the machine body is reversed, it is sufficient to activate the thrust generator 17 located on the upper side of the slope, out of the thrust generators 17 on the left and right sides. In addition, in this embodiment, the thrust generator 17 located on the upper side of the slope may generate thrust to push the portion of the machine body 10 on the upper side of the slope downward, and the thrust generator 17 located on the lower side of the slope may generate thrust to push the portion of the machine body 10 on the lower side of the slope upward.
(5) A configuration is also possible where, while the mower A is moving on the slope ground in the slope direction, at least a thrust generator 17 located on the upper side of the slope, out of the front and rear portions of the machine body 10, is activated. For example, as shown in FIG. 12, the machine body 10 may include, in its front portion, a thrust generator 17, and while the mower A is traveling up the slope ground, the thrust generator 17 may be configured to be activated when the mower A is traveling up the slope ground. Furthermore, as shown in FIG. 13, the machine body 10 may include thrust generators 17 in its front and rear portions, respectively, and while the mower A is moving on the slope ground in the slope direction, even if the moving direction of the machine body is reversed, it is sufficient to activate the thrust generator 17 located on the upper side of the slope, out of the thrust generators 17 on the front and rear sides.
(6) A configuration is also possible where the machine body 10 includes thrust generators 17 on both the left and right sides as well as on both the front and rear sides thereof. In this configuration, thrust can be generated to push the portion on the upper side of the slope downward, regardless of the direction of movement, in either case where the mower A moves on the slope ground in a direction orthogonal to the slope direction or the mower A moves on the slope ground in the slope direction.
(7) The work machine may also not be provided with any thrust generator 17.
(8) A configuration is also possible where the thrust generator 17 is activated by the operator manually operating the remote-control device 37, regardless of a posture change of the mower A.
(9) The work device is not limited to the mowing device 12, and various types of work devices, such as seeding devices for sowing seeds in fields, pesticide sprayers for applying pesticides, and seedling transplanters for planting seedlings, can be used.
(10) The flight vehicle B may adopt a drive type of driving the propellers using an internal combustion engine (engine), or may adopt a parallel hybrid drive type of driving the propellers using both the electric motors 19 and the internal combustion engine. Alternatively, the flight vehicle B may adopt a series hybrid drive type of driving a generator using an internal combustion engine, and driving the electric motors 19 using the generated power.

### Industrial Applicability

The present invention is applicable to a work machine that is suspended and held by an unmanned vehicle via suspension tools and performs predetermined work.

### Description of Reference Signs

10: Machine body
11: Ground wheel
12: Work device
13: Suspension tool
B: Unmanned flight vehicle
J: Suspension point

## Claims

1. A work machine configured to be suspended and held by an unmanned flight vehicle via suspension tools and perform predetermined work, comprising:
a machine body; a plurality of ground wheels supporting the machine body to enable moving and traveling of the machine body; and a work device provided at a lower part of the machine body and configured to perform predetermined ground work,
the machine body having a plurality of suspension points to which the suspension tools are respectively connected, the suspension points being provided at intervals while surrounding a gravity center position in a plan view.

2. The work machine according to claim 1,
wherein the interval between each pair of adjacent suspension points is greater than half of an overall width of the machine body in a direction in which the pair of adjacent suspension points are next to each other.

3. The work machine according to claim 1,
wherein the plurality of suspension points include a suspension point located on the machine body on a downstream side in a moving direction of the unmanned flight vehicle and a suspension point located on the machine body on an upstream side in the moving direction, and
the suspension point on the downstream side in the moving direction receives a suspension load that is greater than half of a total suspension load applied to the machine body.

4. The work machine according to claim 1,
wherein the work machine is changeable and adjustable with respect to a state of suspension by the suspension tools, and
in response to a suspension load applied to a suspension point on a downstream side in a moving direction being less than half of a total suspension load, the state of suspension by the suspension tools is changed and adjusted in such a manner that the suspension load applied to the suspension point on the downstream side in the moving direction is greater than half of the total suspension load.

5. The work machine according to any one of claims 1 to 4,
wherein the ground wheels are traveling wheels, and the work machine executes the work while moving by being towed by the suspension tools with the traveling wheels being in ground contact.

6. The work machine according to any one of claims 1 to 4,
wherein the work device is a mowing device configured to perform mowing work while moving along a ground surface.
